# EUROPEAN PATENT APPLICATION

(11) **EP 3 109 523 A1**
(43) Date of publication of application: **28.12.2016**
(21) Application number: 15783356.7
(22) Date of filing: 14.04.2015
(51) Int. Cl.: F16K 17/04

(54) **RELIEF VALVE**

(30) Priority: 24.04.2014 JP 2014089796
(71) Applicant: KYB Corporation, Tokyo 105-6111 (JP)
(72) Inventor: KUBO, Kohei, Tokyo 105-6111 (JP); NAGASAKA, Ryouichi, Tokyo 105-6111 (JP)
(74) Representative: Grünecker Patent- und Rechtsanwälte PartG mbB
(86) International application number: PCT/JP2015/061498
(87) International publication number: WO 2015/163199

(57) **Abstract**

A relief valve (100) comprises a ball body (20) separated from a seat member (10) when a pressure of a working oil from a supply passage (11) exceeds a set pressure, and a ball-body support member (30) biased by a biasing member (40) and supporting the ball body (20). The ball-body support member (30) comprises a holding recess portion (31) for holding the ball body (20) and a taper portion (32) formed around the holding recess portion (31) and inclined so as to become deeper toward the holding recess portion (31).

## Description

### TECHNICAL FIELD

The present invention relates to a relief valve.

### BACKGROUND ART

A relief valve is to prevent a pressure of a working fluid from rising abnormally high by opening when the pressure of the working fluid in a fluid pressure circuit exceeds a set pressure.

JP2006-266402A, published by the Japan Patent Office in 2006, discloses a relief valve on which a ball biased by a coil spring is seated on a seat surface of a seat member. In this relief valve, when a pressure of working oil exceeds a set pressure set by a biasing force of the coil spring, the ball is lifted from the seat surface by the pressure of the working oil.

### SUMMARY OF INVENTION

In the relief valve according to JP2006-266402A, if the ball is inserted from an opening portion of a casing during assembling, the ball may not be seated at a normal position on the seat surface. In such a case, it is necessary to adjust a position of the ball so as to be seated at the normal position. Thus, improvement of assembling performances has been in demand.

It is therefore an object of the present invention to improve the assembling performances of the relief valve.

In order to achieve the above object, an embodiment of the present invention provides a relief valve adapted to open when a pressure of a working fluid exceeds a set pressure. The relief valve comprises a seat member having a supply passage through which the working fluid is supplied, a ball body adapted to close the supply passage in a state seated on the seat member and to be separated from the seat member when the pressure of the working fluid supplied from the supply passage exceeds the set pressure, and a biasing member adapted to bias the ball-body support member toward the seat member with the set pressure. The ball-body support member comprises a holding recess portion facing the supply passage and adapted to hold the ball body, and a taper portion formed around the holding recess portion and inclined to become deeper toward the holding recess portion.

The details as well as other features and advantages of the present invention are set forth in the remainder of the specification and are shown in the accompanying drawings.

### BRIEF DESCRIPTION OF DRAWING

Fig. 1 is a longitudinal sectional view of a relief valve according to an embodiment of the present invention
Fig. 2 is an enlarged view of an essential part in Fig. 1.

### DESCRIPTION OF EMBODIMENTS

Referring to the attached drawings, a relief valve 100 according to an embodiment of the present invention will be described.

The relief valve 100 opens when a pressure of working oil reaches and exceeds a set pressure so as to prevent the pressure of the working oil from rising abnormally high. In this embodiment, the working oil is used as a working fluid, but other fluids such as water and compressed air may be used as the working fluid.

The relief valve 100 comprises a seat member 10 having a supply passage 11 through which the working oil is supplied, a ball body 20 for closing the supply passage 11 in a state seated on the seat member 10, a ball-body support member 30 for supporting the ball body 20 between itself and the seat member 10, a return spring 40 as a biasing member for biasing the ball-body support member 30 toward the seat member 10, and a case member 50 having a drain passage 51 for draining the working oil supplied from the supply passage 11.

The seat member 10 is formed into a cylindrical shape. The seat member 10 is press-fitted in and fixed to an inner periphery of the case member 50. The seat member 10 has a seating portion 12 on which the ball body 20 is seated on a surface facing the ball-body support member 30.

The supply passage 11 is a circular hole formed by penetrating a center of the seat member 10 in an axial direction. The supply passage 11 is connected to a discharge passage not shown lead from a hydraulic pump not shown, for example. The supply passage 11 is connected to a passage to which working oil with a pressure higher than that in the drain passage 51 is supplied.

The seating portion 12 is formed by enlarging a diameter of an end portion of the supply passage 11 so that the ball body 20 is seated thereon. The seating portion 12 is formed such that a minimum diameter thereof is smaller than a diameter of the ball body 20. In a state where the ball body 20 is seated on the seating portion 12, a part of the ball body 20 enters into the supply passage 11. At this time, the seating portion 12 and the ball body 20 are brought into a circular line contact with each other, and no gap is formed between the seating portion 12 and the ball body 20.

The ball body 20 is separated from the seating portion 12 of the seat member 10 when the pressure of the working oil supplied from the supply passage 11 exceeds the set pressure. When the ball body 20 is separated from the seating portion 12, a gap is formed between the ball body 20 and the seating portion 12, and the supply passage 11 on a high-pressure side communicates with the drain passage 51 on a low-pressure side. As a result, the working oil flowing in from the supply passage 11 is circulated to a tank not shown through the drain passage 51.

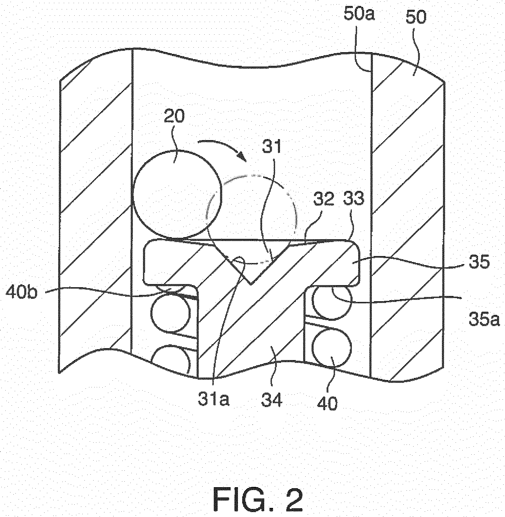

As illustrated in Fig. 2, the ball-body support member 30 is formed into a substantially columnar shape. The ball-body support member 30 comprises a holding recess portion 31 formed to face the seating portion 12 of the supply passage 11, thereby holding the ball body 20 together. The ball-body support member 30 also comprises a taper portion 32 formed on a periphery of the holding recess portion 31 and inclined so as to become deeper toward the holding recess portion 31. The ball-body support member 30 further comprises an insertion portion 34 to be inserted into an inner periphery of the return spring 40 and a flange portion 35 biased by the return spring 40.

The holding recess portion 31 is a conical hole portion formed in an end surface 33 of the ball-body support member 30. The holding recess portion 31 is formed at a radial center of the ball-body support member 30. In a state where the ball body 20 is held in the holding recess portion 31, a part of the ball body 20 enters into the holding recess portion 31.

The ball body 20 is supported to have a circular line contact with a side surface 31a of the holding recess portion 31. Thus, a positional relation between the ball body 20 and the holding recess portion 31 is similar to a case where the taper portion 32 is not formed. Thus, even if a prior-art ball-body support member is replaced by the ball-body support member 30, hydraulic characteristics of the relief valve 100 are not changed but the ball-body 20 can be stably held. Further, instead of causing the ball body 20 to be brought into a circular line contact with the side surface 31a of the holding recess portion 31, the ball body 20 may be brought into a circular line contact with a boundary between the holding recess portion 31 and the taper portion 32.

The taper portion 32 is a truncated conical recess portion formed in the end surface 33 of the ball-body support member 30. The taper portion 32 is formed continuously from an outermost circumference of the holding recess portion 31. The taper portion 32 is formed with an inclination angle smaller than the inclination angle of the holding recess portion 31. The inclination angle, here, means an angle with respect to the end surface 33.

The taper portion 32 is formed such that the closer it gets to the holding recess portion 31 toward the inner periphery from the outer periphery of the ball-body support member 30, the deeper a depth from the end surface 33 becomes. That is, the taper portion 32 is formed with inclination so that the ball body 20 placed on the end surface 33 of the ball-body support member 30 is led to the holding recess portion 31.

The taper portion 32 is formed such that, when the ball-body support member 30 is placed so that the end surface 33 is an upper surface, a center of the ball body 20 is located on the taper portion 32 in a state where the ball body 20 is in contact with a side wall 50a on an inner side of the case member 50 as illustrated in Fig. 2. As a result, at whatever position on the ball-body support member 30 the ball body 20 is inserted, the center is located on the taper portion 32, and hence the ball body 20 rotates on the taper portion 32 and led to the holding recess portion 31.

Even if the return spring 40 and the ball-body support member 30 are inserted with inclination to the case member 50, the taper portion 32 may be formed with such a size that the center of the ball body 20 is located on the taper portion 32 at all times in the state where the ball body 20 is brought into contact with the side wall 50a of the case member 50. The return spring 40 and the ball-body support member 30 are inclined to such an angle that the outer periphery of the ball-body support member 30 is in contact with the side wall 50a of the case member at the maximum. At this time, by forming an outer diameter of the taper portion 32 large, the center of the ball body 20 is located on the taper portion 32 to whatever position on the ball-body support member 30 the ball body 20 is inserted.

The insertion portion 34 is formed to have a diameter smaller than an inner diameter of the return spring 40. Insertion of the insertion portion 34 into the inner periphery of the return spring 40 causes the ball-body support member 30 to be supported by the return spring 40.

The flange portion 35 is formed to have a diameter enlarged on the end portion where the end surface 33 of the ball-body support member 30 is formed. The flange portion 35 is formed with a diameter larger than that of the insertion portion 34. The flange portion 35 is formed to have a diameter smaller than the inner periphery of the case member 50. With a back surface 35a of the flange portion 35, the return spring 40 is brought into contact.

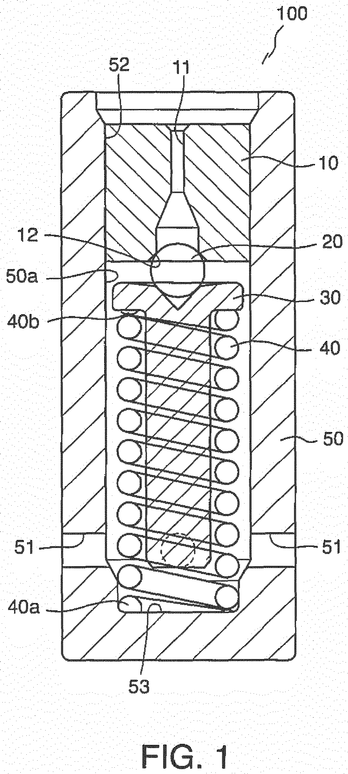

As illustrated in Fig. 1, the return spring 40 is constituted by a coil spring having one end 40a brought into contact with a bottom surface portion 53 of the case member 50 and another end 40b in contact with the ball-body support member 30. An outer diameter of the return spring 40 is set to be smaller than the inner periphery of the case member 50.

The return spring 40 is accommodated in the case member 50 in a compressed state. The return spring 40 is compressed in an axial direction through the ball body 20 when the seat member 10 is press-fitted in the case member 50. In the return spring 40, a set pressure above which the relief valve 100 is opened is determined according to its biasing force.

In this embodiment, the return spring 40 biases the ball-body support member 30 by a biasing force set in advance. However, it is possible to make the biasing force of the return spring 40 adjustable.

The case member 50 is formed into a cylindrical shape with a bottom. An opening portion 52 of the case member 50 is closed by the seat member 10 that is press-fitted into the case member 50. The case member 50 accommodates the return spring 40, the ball-body support member 30, and the ball body 20.

The bottom surface portion 53 of the case member 50 is formed as a recess having a diameter substantially equal to an outer diameter of the return spring 40. Thus, when the return spring 40 is inserted into the case member 50, the return spring 40 is just fitted with the bottom surface portion 53. The bottom surface portion 53 is formed to a depth that can hold the return spring 40 in a state coaxial with the case member 50.

The drain passage 51 is a through hole having an opening in the sidewall 50a in the vicinity of the bottom surface portion 53 of the case member 50. The drain passage 51 is formed at four spots in a circumferential direction of the case member 50 at an interval of 90 degrees. The drain passage 51 may open to any position in the case member 50 as long as the working oil flowing in from the supply passage 11 through the gap between the ball body 20 and the seating portion 12 can be drained. The drain passage 51 communicates with the tank not shown storing the working oil, for example.

Subsequently, an assembling procedure of the relief valve 100 will be described.

First, the case member 50 is placed so that the opening portion 52 is directed upward, and the return spring 40 and the ball-body support member 30 are inserted into the case member 50. Subsequently, the ball body 20 is inserted through the opening portion 52 of the case member 50.

Here, at whatever position on the end surface 33 of the ball-body support member 30 the ball body 20 is inserted, the center of the ball body 20 is located on the taper portion 32. Thus, even if the ball body 20 is inserted to a position offset from the holding recess portion 31, the ball body 20 rotates on the taper portion 32 and lead to the holding recess portion 31. Thus, the ball body 20 can be seated on a normal position of the ball-body support member 30. Therefore, since there is no need to adjust the position of the ball body 20, assembling performances of the relief valve 100 is improved.

Finally, the seat member 10 is press-fitted into the opening portion 52 of the case member 50. As a result, the opening portion 52 of the case member 50 is closed. The seat member 10 is press-fitted only by a predetermined press-fit amount with respect to the case member 50.

The seat member 10 compresses the return spring 40 through the ball body 20 and the ball-body support member 30 until the return spring 40 becomes a length set in advance. Thus, the ball body 20 is located between the seating portion 12 of the seat member 10 and the holding recess portion 31 of the ball-body support member 30, and the biasing force of the return spring 40 is set to a value corresponding to a set pressure of the relief valve 100.

Since the ball body 20 is held by the holding recess portion 31, the ball body 20 is reliably gripped by the ball body 20 and the seating portion 12 of the seat member 10, when the seat member 10 is press-fitted.

When the relief valve 100 is assembled in a state where a center axis of the case member 50 is close to vertical, the ball body 20 is guided to the holding recess portion 31 as described above. However, when the relief valve 100 is assembled in a state where the center axis of the case member 50 is inclined, only by inserting the ball body 20 into the case member 50, the ball body 20 is kept in contact with the side wall 50a and is not guided to the holding recess portion 31 in some cases. Even in that case, when the seat member 10 is press-fitted into the case member 50, the ball body 20 pushed by the seat member 10 moves on the taper portion 32 and is guided to the holding recess portion 31. Thus, even if the relief valve 100 is assembled in the state where the center axis of the case member 50 is inclined, the ball body 20 can be seated at the normal position of the ball-body support member 30.

According to the aforementioned embodiment, the following effect is obtained.

Since the taper portion 32 is formed around the holding recess portion 31 of the ball-body support member 30, even if the ball body 20 is inserted to the position offset from the holding recess portion 31 in assembling, the ball body 20 rotates on the taper portion 32 and lead to the holding recess portion 31. Thus, the ball body 20 is always seated at the normal position of the ball-body support member 30. Since there is no need to adjust the position of the ball body 20, the assembling performances of the relief valve 100 is improved.

Although the present invention has been described above with reference to certain embodiments, the present invention is not limited to the embodiments described above. Modifications and variations of the embodiments described above will occur to those skilled in the art, within the scope of the claims.

[**0040**] The contents of Tokugan 2014-089796, with a filing date of April 24, 2014 in Japan, are hereby incorporated by reference. The embodiments of the present invention in which an exclusive property or privilege is claimed are defined as follows:

## Claims

1. A relief valve adapted to open when a pressure of an working fluid exceeds a set pressure, comprising:
a seat member having a supply passage through which the working fluid is supplied;
a ball body adapted to close the supply passage in a state seated on the seat member and to be separated from the seat member when the pressure of the working fluid supplied from the supply passage exceeds the set pressure;
a ball-body support member adapted to support the ball body between the ball-body support member and the seat member; and
a biasing member adapted to bias the ball-body support member toward the seat member with the set pressure,
wherein the ball-body support member comprises:
a holding recess portion facing the supply passage and adapted to hold the ball body; and
a taper portion formed around the holding recess portion and inclined to become deeper toward the holding recess portion.

2. The relief valve according to claim 1, further comprising:
a case member adapted to accommodate the biasing member, the ball-body support member, and the ball body, the case member comprising a discharge passage adapted to discharge the working fluid supplied from the supply passage,
wherein the taper portion is formed in a location to cause a center of the ball body is disposed on the taper portion in a state where the ball body is in contact with a side wall of the case member.

3. The relief valve according to claim 1, wherein
the holding recess portion is formed into a conical hole formed in an end surface of the ball-body support member; and
the ball body is supported by contacting a side surface of the holding recess portion.
